# EUROPÄISCHE PATENTSCHRIFT

(11) **EP 1 834 082 B1**
(45) Veröffentlichungstag und Bekanntmachung des Hinweises auf die Patenterteilung: **11.03.2020**
(21) Anmeldenummer: 05817912.8
(22) Anmeldetag: 08.12.2005
(51) Int. Cl.: F02N 11/08, B60K 6/48

(54) **VERFAHREN UND VORRICHTUNG ZUM OPTIMIERTEN STARTEN EINES VERBRENNUNGSMOTORS**
METHOD AND DEVICE FOR STARTING AN INTERNAL COMBUSTION ENGINE IN AN OPTIMISED MANNER
PROCEDE ET DISPOSITIF PERMETTANT UN DEMARRAGE OPTIMISE D'UN MOTEUR A COMBUSTION INTERNE

(30) Priorität: 28.12.2004 DE 102004062939
(43) Veröffentlichungstag der Anmeldung: 19.09.2007
(73) Patentinhaber: Volkswagen Aktiengesellschaft, 38440 Wolfsburg (DE); Skoda Auto a.s., 293 60 Mlada Boleslav (CZ)
(72) Erfinder: HOLZ, Matthias, 38165 Lehre (DE); ZILLMER, Michael, 38173 Sickte (DE); POTT, Ekkehard, 38518 Gifhorn (DE); PROCHAZKA, David, 50745 Libosovice (CZ)
(74) Vertreter: Patentanwälte Bressel und Partner mbB
(86) Internationale Anmeldenummer: PCT/EP2005/013138
(87) Internationale Veröffentlichungsnummer: WO 2006/069620

(56) Entgegenhaltungen:
- EP-A- 1 309 064
- EP-A1- 1 424 494
- EP-B- 0 964 995
- EP-B- 1 073 842
- US-A1- 2003 139 859
- US-A1- 2004 124 811
- US-B1- 6 713 894

## Beschreibung

Die Erfindung betrifft ein Verfahren nach dem Oberbegriff des Patentanspruchs 1 und eine Vorrichtung nach dem Oberbegriff des Patentanspruchs 11.

Fahrzeuge mit einem Verbrennungsmotor verfügen über einen Starter. Der Starter kann als konventioneller Starter, riemengetriebener Starter-Generator oder Kurbelwellen-Starter-Generator ausgebildet sein. Der Starter umfasst jeweils eine Elektromaschine, die eine Kurbelwelle des Verbrennungsmotors zum Starten durchdreht. Die zum Antreiben der Elektromaschine des Starters benötigte elektrische Energie wird einem elektrischen Energiespeicher entnommen. Bei dem Energiespeicher handelt es sich in der Regel um eine Batterie, die ebenfalls für eine Versorgung eines Bordnetzes des Fahrzeuges verantwortlich ist. Die zum Starten des Verbrennungsmotors benötigte Startleistung bzw. Startenergie ist von einer Temperatur des Verbrennungsmotors abhängig. Bei niedrigen Temperaturen ist die benötigte Startenergie aufgrund einer erhöhten Haftreibung und größerer Ölviskosität größer als bei höheren Temperaturen. Zusätzlich sinkt ein maximaler entnehmbarer Entladestrom einer insbesondere nicht voll aufgeladenen oder bereits gealterten Batterie ab. Daher nimmt die Startsicherheit bekannter Fahrzeuge bei tiefen Temperaturen ab.

Um die Startsicherheit zu erhöhen, ist in der Druckschrift DE 196 01 241 A1 vorgeschlagen, einen Kondensatorspeicher parallel zu der Batterie zu schalten. Dieser wird vor dem Starten des Verbrennungsmotors aufgeladen. Ein Kondensatorspeicher besitzt einen geringeren Innenwiderstand als eine Batterie und kann daher nahezu temperaturunabhängig große Entladungsströme während des Startvorgangs zur Verfügung stellen. Nachteilig an der vorgeschlagenen Vorrichtung ist, dass der Kondensatorspeicher nur auf die Spannung der Bordnetzbatterie aufgeladen werden kann, die in der Regel 14 V beträgt.

Alternativ ist aus der Druckschrift DE 197 52 661 A1 bekannt, einen so genannten Zwischenkreiskondensator vorzusehen, der mit dem Bordnetz über einen DC/DC-Wandler verbunden ist. Dieser Zwischenkreiskondensator wird auf eine Spannung von etwa 400 V aufgeladen. Hierbei wird die Kleinspannungsgrenze von etwa 60 V deutlich überschritten, so dass aufwendige Isolierungsmaßnahmen als Berührschutz notwendig sind.

Bei beiden bekannten Vorrichtungen wird auf die Bordnetzversorgung zum Bereitstellen der Startenergie zurückgegriffen, so dass der Energiespeicher des Bordnetzes belastet wird.

Die EP 0964995 A1 offenbart ein Startersystem für einen Verbrennungsmotor, bei der einem Kondensatorspeicher zum Speisen eines Starters temperaturabhängig Energie für andere Verbraucher entnehmbar ist.

EP 1073842 A1 lehrt ein Startersystem für einen Verbrennungsmotor, bei der ein Starterwinkel des Verbrennungsmotors geeignet gewählt ist.

US 2003139859 A1 offenbart eine Steuervorrichtung, mit der von einem Energiespeicher bereitzustellende Mindestspannungen temperaturabhängig einstellbar sind.

EP 1309064 A2 lehrt Lösungen zum Energiemanagement in Kraftfahrzeugen, bei denen Energiespeicher mit unterschiedlichen Entladungsverhalten vorgesehen sind.

EP 1424494 A1 offenbart ein Hybridantriebssystem mit einem Verbrennungsmotor und einer elektrischen Maschine, wobei die elektrische Maschine von unterschiedlichen Energiespeichern mit elektrischer Energie versorgbar ist.

Der Erfindung liegt das technische Problem zugrunde, ein Verfahren und eine Vorrichtung zum optimierten Starten eines Verbrennungsmotors zu schaffen, die eine Startsicherheit, insbesondere bei tiefen Temperaturen, verbessern.

Die Lösung des technischen Problems ergibt sich durch ein Verfahren mit den Merkmalen des Patentanspruchs 1 und eine Vorrichtung mit den Merkmalen des Patentanspruchs 11. Weitere vorteilhafte Ausgestaltungen der Erfindung ergeben sich aus den Unteransprüchen.

Hierzu wird mittels mindestens eines Temperatursensors die Temperatur des Verbrennungsmotors gemessen und der Kondensatorspeicher mit Hilfe einer Batterie über einen weiteren DC/DC-Wandler, der parallel zu einem Schalter die Batterie parallel mit dem Kondensatorspeicher verbindet, auf eine Soll-Spannung aufgeladen, wobei die Soll-Spannung mittels einer Steuereinrichtung so festgelegt wird, dass die in dem auf die Soll-Spannung aufgeladenen Kondensatorspeicher gespeicherte elektrische Energie größer als die anhand der gemessenen Temperatur ermittelte Startenergie für einen oder mehrere Startvorgänge ist. Hierdurch wird zum einen sichergestellt, dass in dem Kondensatorspeicher immer eine ausreichende Energiemenge gespeichert ist, um ein sicheres Starten des Verbrennungsmotors mittels des Starters zu gewährleisten. Ferner wird die zum Starten benötigte Energie nicht dem Energiespeicher des Bordnetzes, sondern einer zusätzlichen Batterie entnommen, die über den weiteren DC/DC-Wandler mit dem Kondensator parallel verbunden ist. Hierdurch wird eine zusätzliche Belastung des Energiespeichers des Bordnetzes beim Starten des Verbrennungsmotors, insbesondere auch bei niedrigen Temperaturen, vermieden. Eine starke Belastung, d.h. eine große Leistungsentnahme aus einer Batterie, beschleunigt deren Alterungsprozess. Da diese starken Belastungen des Energiespeichers des Bordnetzes beim Starten nun vermieden werden, wird die Lebensdauer des Energiespeichers des Bordnetzes verlängert.

Für das Aufladen des Kondensatorspeichers wird (im Wesentlichen begrenzt durch die Leistung des DC/DC-Wandlers) eine endliche Zeit benötigt. Daher ist bei einer vorteilhaften Ausführungsform der Erfindung vorgesehen, dass mittels mindestens eines Ereignissensors mindestens ein Ereignis, insbesondere ein Entriegeln einer Zentralverriegelung, ein Einlegen eines Zündschlüssels in ein Zündschloss, ein Belasten eines Fahrersitzes, ein Einschalten einer Sitzheizung, registriert wird und ein Zustand der Batterie und des Kondensatorspeichers ermittelt wird und das Aufladen des Kondensatorspeichers zeitlich eine Zeitspanne nach dem Registrieren des mindestens einen Ereignisses bewirkt wird, wobei die Zeitspanne von dem Zustand der Batterie und dem Zustand des Kondensatorspeichers abhängig bestimmt wird. Das Aufladen des Kondensatorspeichers wird also bewirkt, nachdem mittels mindestens eines der Ereignissensoren mindestens ein Ereignis registriert worden ist. Eines der Ereignisse geht einem Starten des Verbrennungsmotors in der Regel zeitnah voraus. Wird eines oder werden mehrere dieser Ereignisse registriert, so wird das Aufladen des Kondensators bewirkt. Hierdurch ist einem Fahrzeuglenker anschließend jederzeit ohne Zeitverzögerung ein Starten des Verbrennungsmotors möglich. Dieses bedeutet einen gesteigerten Bedienungskomfort des Fahrzeugs.

Alternativ ist bei einer anderen vorteilhaften Weiterbildung der Erfindung vorgesehen, dass die Spannung des Kondensatorspeichers mittels eines Spannungssensors ermittelt wird und das Aufladen des Kondensatorspeichers auf eine maximale Hysterese-Spannung bewirkt wird, die um ein frei applizierbares Delta größer als die Soll-Spannung ist, sobald die Spannung des Kondensatorspeichers eine minimale Hysterese-Spannung unterschreitet, die um ein frei applizierbares weiteres Delta kleiner als die Soll-Spannung ist. Bei dieser Ausführungsform ist immer nahezu die benötigte Startenergie in dem Kondensatorspeicher gespeichert. Da jedoch bei einem Kondensatorspeicher immer ein Spannungsabfall durch Selbstentladung auftritt, ist ein Nachladen des Kondensatorspeichers von Zeit zu Zeit notwendig. Die Länge des Zeitintervalls für das Nachladen wird durch das frei applizierbare Delta bzw. das frei applizierbare weitere Delta bestimmt. Wenn sichergestellt werden soll, dass jederzeit mindestens die erforderliche Startenergie für einen oder mehrere Startvorgänge in dem Kondensatorspeicher vorhanden ist, kann das weitere Delta gleich null gesetzt werden. In diesem Fall wird der Kondensatorspeicher von Zeit zu Zeit auf die maximale Hysterese-Spannung aufgeladen, welche oberhalb der Soll-Spannung liegt. Sobald die Spannung wieder auf die Soll-Spannung abgefallen ist, wird der Kondensatorspeicher in diesem Fall erneut auf die maximale Hysterese-Spannung aufgeladen. Die minimale Hysterese-Spannung entspricht in diesem Fall der Soll-Spannung.

Durch eine Fehlbedienung des Fahrzeugs kann ein so genanntes Abwürgen des Verbrennungsmotors auftreten, so dass unmittelbar nach dem Starten des Verbrennungsmotors ein weiterer Start des Verbrennungsmotors erforderlich ist. Daher sieht eine besonders vorteilhafte Weiterbildung der Erfindung vor, dass die Soll-Spannung so festgelegt wird, dass die in dem auf die Soll-Spannüng aufgeladenen Kondensatorspeicher gespeicherte elektrische Energie ausreicht, um eine vorgegebene Anzahl von Startvorgängen des Verbrennungsmotors bei der gemessenen Temperatur durchführen zu können, und die Spannung an dem Kondensatorspeicher nach dem Durchführen der vorgegebenen Anzahl von Startvorgängen größer als eine Batteriespannung der Batterie ist. Die vorgegebene Anzahl von Startvorgängen kann jeden Wert größer gleich eins annehmen. Vorzugsweise wird die vorgegebene Anzahl von Startvorgängen, für die eine Energie in dem Kondensatorspeicher gespeichert wird, zwei betragen. Diese Weiterbildung weist zusätzlich den Vorteil auf, dass nach dem Startvorgang die Spannung an dem Kondensatorspeicher immer noch größer als die Batteriespannung ist. Hierdurch wird verhindert, dass der Schalter, der den Kondensatorspeicher und die Batterie parallel miteinander verbindet, geschlossen werden muss, um einen Teil der zum Starten benötigten Energie der Batterie direkt zu entnehmen. Bei der direkten Entnahme tritt eine starke Belastung der Batterie ein, was eine unerwünschte Alterung der Batterie beschleunigen würde.

Insbesondere, wenn die Batterie nicht mehr voll aufgeladen ist, muss sichergestellt werden, dass mindestens zwei Startvorgänge mittels der in dem Kondensatorspeicher gespeicherten Energie ausgeführt werden können. Daher ist vorteilhafterweise vorgesehen, dass die vorgegebene Anzahl von Startvorgängen auf mindestens zwei erhöht wird, wenn der Ladungszustand der Batterie einen Mindestladungszustand unterschreitet.

In Form der Batterie steht dem Fahrzeug zusätzlich zu dem Energiespeicher des Bordnetzes ein zweiter Energiespeicher zur Verfügung, der verwendet werden kann, um einen nicht voll funktionsfähigen bzw. voll belastbaren Energiespeicher des Bordnetzes zu entlasten. Daher sieht eine bevorzugte Ausführungsform der Erfindung vor, dass ein Ladungszustand des Energiespeichers des Bordnetzes ermittelt wird und bei einem Unterschreiten eines Mindestladungszustandsschwellenwertes die Soll-Spannung so festgelegt wird, dass der Kondensatorspeicher während der vorgegebenen Anzahl der Startvorgänge zusätzlich Energie über den DC/DC-Wandler in das Bordnetz liefern kann, wobei der Mindestladungszustandsschwellenwert von einem Alterungszustand des Energiespeichers abhängig ist.

Die Startsicherheit einer bevorzugten Weiterbildung wird noch dadurch erhöht, dass das Aufladen des Kondensatorspeichers zumindest teilweise über den DC/DC-Wandler aus dem Energiespeicher des Bordnetzes bewirkt wird, wenn der Ladungszustand der Batterie und/oder der Alterungszustand der Batterie einen entsprechenden Ladungs- und/oder Alterungszustandsschwellenwert unterschritten haben. Dies bedeutet, dass das Aufladen des Kondensatorspeichers über den DC/DC-Wandler aus dem Energiespeicher des Bordnetzes erfolgt, wenn die Batterie nicht in der Lage ist, den Kondensatorspeicher überhaupt oder in einer angemessenen Zeit auf die Soll-Spannung aufzuladen.

Eine Weiterentwicklung der Erfindung sieht vor, dass die zum Starten benötigte tatsächliche Energie gemessen und gespeichert wird und nachfolgend beim Festlegen der Soll-Spannung berücksichtigt wird. Mit dieser Ausführungsform ist es möglich festzustellen, dass die tatsächlich benötigte Energie zum Starten des Verbrennungsmotors größer als die in dem Kondensatorspeicher gespeicherte Energie war, obwohl dieser auf die festgelegte Soll-Spannung aufgeladen war. Bei einem nachfolgenden Startvorgang kann der Kondensatorspeicher mit dem Differenzbetrag zusätzlich aufgeladen werden, d.h. die Soll-Spannung höher festgelegt werden. Der Differenzbetrag entspricht der Energie, die bei dem vorausgegangenen Startvorgang der Batterie zusätzlich zu der in dem Kondensatorspeicher gespeicherten Energie entnommen wurde. Auf diese Art und Weise treten nur sehr selten Fälle auf, in denen der Batterie zusätzlich zu dem Kondensatorspeicher beim Starten Energie entzogen werden muss.

Um das Aufladen des Kondensatorspeichers möglichst schnell zu bewirken, sieht eine besonders vorteilhafte Ausführungsform der Erfindung vor, dass eine Batteriespannung der Batterie größer als eine Nennspannung des Energiespeichers des Bordnetzes ist und der Kondensatorspeicher maximal auf eine Spannung von etwa 60 V aufgeladen wird. Eine Begrenzung der Spannung des Kondensatorspeichers auf 60 V ist vorteilhaft, da bis zu einer Spannung von 60 V kein aufwendiger Berührschutz notwendig ist.

Das Verfahren kann besonders gut realisiert werden, wenn der Kondensatorspeicher als Ultracap ausgebildet ist.

Die Merkmale der erfindungsgemäßen Vorrichtung weisen dieselben Vorteile wie die entsprechenden Merkmale des erfindungsgemäßen Verfahrens auf.

Im Folgenden wird die Erfindung anhand eines bevorzugten Ausführungsbeispiels unter Bezugnahme auf eine Zeichnung näher erläutert. Hierbei zeigen:
- Fig. 1: einen schematischen Aufbau eines Fahrzeugs;
- Fig. 2: einen Graphen eines Ladungszustandes eines Kondensatorspeichers aufgetragen gegen die Zeit.

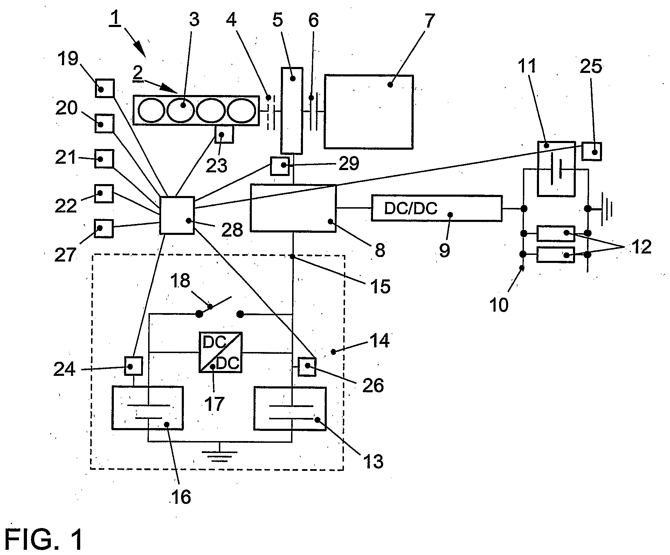

In Fig. 1 ist eine schematische Ansicht eines Fahrzeugs 1 mit einem Antriebssystem 2 dargestellt. Das Antriebssystem 2 umfasst einen Verbrennungsmotor 3, der über eine optionale Kupplung 4 mit einem Starter verbunden ist, der als eine Elektromaschine 5 ausgebildet ist. Die Elektromaschine 5 kann sowohl generatorisch als auch motorisch betrieben werden. Ein solches Antriebssystem 2 wird als Hybridantriebssystem bezeichnet. Die Elektromaschine 5 ist über eine Fahrzeugkupplung 6 und ein Fahrzeuggetriebe 7 mit angetriebenen Rädern (nicht dargestellt) des Fahrzeugs 1 verbunden. Über eine Leistungselektronik 8 und einen DC/DC-Wandler 9 ist ein Bordnetz 10 mit der Elektromaschine 5 verbunden. Das Bordnetz 10 umfasst einen Energiespeicher, der als Niederspannungsbatterie 11 mit einer Nennspannung von vorzugsweise 14 V ausgebildet ist. Die Niederspannungsbätterie 11 speist Verbraucher 12 des Bordnetzes 10.

Ein Kondensatorspeicher 13 eines Hybridenergiespeichers 14 ist über einen Anschluss 15 direkt mit der Leistungselektronik 8 verbunden. Der Kondensatorspeicher 13 ist vorzugsweise als Ultracap ausgestaltet. Der Hybridenergiespeicher 14 umfasst ferner eine Batterie 16, die mittels eines weiteren DC/DC-Wandlers 17 und eines Schalters 18 elektrisch parallel mit dem Kondensatorspeicher 13 verbunden ist.

Zum Starten des Verbrennungsmotors 3 wird die Elektromaschine 5 motorisch betrieben. Die hierfür benötigte elektrische Energie wird dem Hybridenergiespeicher 14 entnommen. Das Fahrzeug umfasst Ereignissensoren zum Erfassen oder Ermitteln von Ereignissen vor einem Startvorgang des Verbrennungsmotors 3. Die Ereignissensoren des Fahrzeugs 1 sind als ein Sensor zum Detektieren einer Entriegelung einer Zentralverriegelung 19, als ein Kontaktsensor 20 zum Erfassen einer Belastung eines Fahrersitzes des Fahrzeugs 1, als ein Schlüsselsensor 21 zum Detektieren eines Einlegens eines Zündschlüssels in ein Zündschloss und als ein Stromsensor 22 zum Detektieren eines Einschaltens einer Sitzheizung ausgebildet. Das Fahrzeug 1 kann beliebige zusätzliche oder anders ausgestaltete Ereignissensoren umfassen. Mittels dieser Ereignissensoren können Aktivitäten eines Fahrers registriert werden, die üblicherweise einem Startvorgang zeitlich vorausgehen.

An dem Verbrennungsmotor 3 ist mindestens ein Temperatursensor 23 angeordnet. Mit Hilfe des Temperatursensors 23 kann eine Temperatur des Verbrennungsmotors 3 gemessen werden. Ein Zustandssensor 24 liefert Zustandsinformationen über die Batterie 16. Diese Zustandsinformationen umfassen einen Ladungszustand (SOC - state of charge) der Batterie 16, einen Alterungszustand (SOH - state of health) der Batterie 16 sowie eine Batteriespannung. Ein weiterer Zustandssensor 25, der an der Niederspannungsbatterie 11 des Bordnetzes 10 angeordnet ist, ermittelt entsprechend einen Ladungszustand, einen Alterungszustand und eine Spannung der Niederspannungsbatterie 11. Ein Spannungssensor 26, der an dem Kondensatorspeicher 13 angeordnet ist, ist vorgesehen, um eine Spannung des Kondensatorspeichers 13 zu ermitteln. Ferner verfügt das Fahrzeug über einen Außentemperatursensor 27 zum Ermitteln einer Außentemperatur.

Eine Steuereinrichtung 28 empfängt die mit Hilfe der Ereignissensoren ermittelten und erfassten Informationen und Daten. Basierend auf der Temperatur des Verbrennungsmotors 3 wird eine Startenergie ermittelt, die zum Starten des Verbrennungsmotors 3 von der Elektromaschine 5 verbraucht werden wird, Anhand der so ermittelten Startenergie wird eine Soll-Spannung festgelegt, auf die der Kondensatorspeicher 13 aufzuladen ist, um mindestens diese Startenergie zu enthalten. Anschließend wird ermittelt, ob die Spannung des Kondensatorspeichers 13 bereits gleich oder größer als die Soll-Spannung ist. In diesem Fall kann ein Startvorgang unverzüglich ausgelöst werden. Andernfalls wird unter Berücksichtigung des Ladungszustands und Alterungszustands der Batterie 16 sowie der ermittelten Batteriespannung ermittelt, wie lange ein Aufladen des Kondensatorspeichers 13 auf die Soll-Spannung über den weiteren DC/DC-Wandler 17 benötigen wird. In Abhängigkeit von der so ermittelten Zeit, die zum Aufladen des Kondensatorspeichers 13 benötigt wird, legt die Steuereinrichtung 28 fest, bei welchem Ereignis, das mittels der Ereignissensoren festgestellt wird, der Aufladevorgang ausgelöst werden soll. Es können auch Ereigniskombinationen verwendet werden. Andere Ausführungsformen können andere und zusätzliche Ereignissensoren umfassen, die sich von den hier beschriebenen unterscheiden, um Aktivitäten des Fahrers zu detektieren. Denkbar ist ebenso, dass die bisherige Nutzung des Fahrzeugs statistisch erfasst wird und hierbei gewonnene statistische Daten verwendet werden, um den Zeitpunkt für das Aufladen des Kondensatorspeichers 13 auf die Soll-Spannung einzuleiten. Ebenso ist denkbar, dass Datums-, Wochentags- und Zeitangaben hierfür ausgewertet werden.

Sollte die Steuereinrichtung 28 feststellen, dass der Ladungszustand oder Alterungszustand der Batterie 16 so sind, dass ein Aufladen des Kondensatorspeichers 13 auf die Soll-Spannung in einer angemessen Zeit nicht möglich ist, so kann das Aufladen des Kondensatorspeichers 13 über den DC/DC-Wandler 9 aus der Niederspannungsbatterie 11 veranlasst werden.

Stellt die Steuereinrichtung 28 hingegen fest, dass aufgrund des Ladungszustands, des Alterungszustands und/oder der Spannung der Niederspannungsbatterie 11 eine ausreichende Versorgung der Verbraucher 12 des Bordnetzes 10 bei einem Startvorgang nicht ausreichend gewährleistet ist, so legt die Steuereinrichtung 28 die Soll-Spannung so fest, dass der Kondensatorspeicher 13 während des Startvorgangs ebenfalls elektrische Energie über den DC/DC-Wandler 9 in das Bordnetz 10 abgeben kann. Vorteilhaft scheint dieses Vorgehen bei einem Ladungszustand von weniger als 60 %, noch vorteilhafter bei einem Ladungszustand von weniger als 80 % und besonders vorteilhaft beim Ladungszustand von weniger als 90 % der Niederspannungsbatterie 11.

Ist der Kondensatorspeicher 13 auf die Soll-Spannung aufgeladen, kann von einem Fahrzeugführer das Starten des Verbrennungsmotors ausgelöst werden. Hierzu wird die Elektromaschine 5 motorisch betrieben und dreht die Kurbelwelle des Verbrennungsmotors 3 durch. Fällt bei dem Startvorgang die Spannung des Kondensatorspeichers 13 auf die Batteriespannung der Batterie 16 ab, so wird der Schalter 18 geschlossen, um zusätzlich benötigte Energie für den Startvorgang der Batterie 16 zu entziehen. Eine solche Belastung der Batterie 16 soll nach Möglichkeit vermieden werden. Sie beschleunigt insbesondere dann, wenn die Batterie 16 nicht voll geladen ist, deren Alterung. Daher ist vorgesehen, dass die Steuereinrichtung 28 die Soll-Spannung soweit erhöht, dass in dem Kondensatorspeicher 13, wenn er auf die Soll-Spannung aufgeladen ist, mindestens die zweifache Startenergie, die zum Starten des Verbrennungsmotors 3 benötigt wird, gespeichert ist. Zusätzlich soll die Spannung an dem Kondensatorspeicher 13 nach dem Durchführen zweier Startvorgänge immer noch größer als die Batteriespannung der Batterie 16 sein. Ein solches Anheben der Soll-Spannung ist dann vorteilhaft, wenn der Ladungszustand der Batterie 16 geringer als 60 %, vorteilhaft geringer als 80 % und besonders vorteilhaft geringer als 90 % ist. Bei der genauen Festlegung dieser Schwellen ist jeweils der Alterungszustand der Batterie 16 zu berücksichtigen. Zur Festlegung der benötigten Startenergie kann zusätzlich die Außentemperatur berücksichtigt werden.

Die beschriebene Ausführungsform nach Fig. 1 umfasst jeweils in dem Kondensatorspeicher 13 in Abhängigkeit von der Temperatur des Verbrennungsmotors 3 eine ausreichende Energiemenge, um mindestens einen Startvorgang, vorzugsweise zwei Startvorgänge, sicher durchführen zu können. Die Ausführungsform umfasst ferner einen weiteren Stromsensor 29, der eine tatsächlich verbrauchte Energie bei einem Startvorgang ermittelt. Stellt die Steuereinrichtung 28 anhand dieser tatsächlich ermittelten Energie fest, dass sie größer als die zuvor ermittelte Startenergie ist, so kann dieses zukünftig berücksichtigt werden, um die Startenergie anzupassen. So werden Fälle, in denen die Batterie 16 während eines Startvorgangs belastet wird, da die in dem Kondensatorspeicher 13 gespeicherte Energie nicht ausreicht, um den Startvorgang des Verbrennungsmotors 3 erfolgreich zu beenden, weiter reduziert.

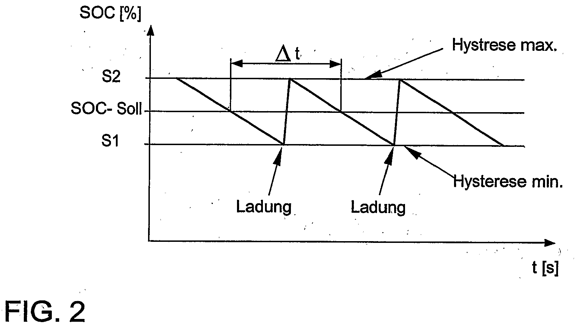

Eine alternative Ausführungsform sieht vor, dass die Spannung des Kondensatorspeichers immer nahezu auf der Soll-Spannung gehalten wird. Da bei jedem Kondensatorspeicher eine Selbstentladung stattfindet, muss die dabei verloren gehende Energie dem Kondensatorspeicher durch Aufladung neu zugefügt werden. Um ein konstantes Nachladen zu vermeiden, ist vorgesehen, dass der Kondensatorspeicher auf eine maximale Hysterese-Spannung aufgeladen wird und ein Nachladen erst dann stattfindet, wenn eine minimale Hysterese-Spannung unterschritten wird. In Fig. 2 ist ein Ladungszustand des Kondensatorspeichers gegen die Zeit aufgetragen. Ein maximaler Ladungszustand S2 entspricht der maximalen Hysterese-Spannung. Ein minimaler Ladungszustand S1 entspricht der minimalen Hysterese-Spannung. Ein Soll-Ladungszustand befindet sich zwischen dem Ladungszustand S1 und dem maximalen Ladungszustand S2. Die maximale Hysterese-Spannung bzw. der maximale Ladungszustand ist um ein frei applizierbares Delta größer als der Soll-Ladungszustand bzw. die Soll-Spannung. Die minimale Hysterese-Spannung bzw. der minimale Ladungszustand ist um ein frei applizierbares weiteres Delta kleiner als der Soll-Ladungszustand bzw. die Soll-Spannung. Das weitere Delta kann gleich null gewählt werden. In diesem Fall wird der Kondensatorspeicher jeweils auf die maximale Hysterese-Spannung aufgeladen und bereits beim Unterschreiten der Soll-Spannung erneut aufgeladen. Der Zeitabstand zwischen zwei Ladungsvorgängen Δt wird durch die Wahl des Deltas und des weiteren Deltas sowie die Selbstentladecharakteristik des Kondensatorspeichers bestimmt.

Insgesamt wird durch die beschriebenen Ausführungsformen erreicht, dass ein sicherer Start des Verbrennungsmotors auch bei tiefen Temperaturen jederzeit gewährleistet ist. Ferner wird eine Niederspannungsbatterie des Bordnetzes während des Startvorgangs nicht belastet. Ist der Ladungszustand der Niederspannungsbatterie des Bordnetzes schlecht, so wird diese während des Startvorgangs sogar durch Energie aus dem Kondensatorspeicher unterstützt. Hierdurch wird zusätzlich eine sichere Versorgung aller Verbraucher des Bordnetzes während des Startvorgangs sichergestellt.

## Patentansprüche

1. Verfahren zum optimierten Starten eines Verbrennungsmotors (3) mittels eines Starters, der mit einem Kondensatorspeicher (13) verbunden ist, wobei der Kondensatorspeicher (13) über einen DC/DC-Wandler (9) mit einem Bordnetz (10) eines Fahrzeugs (1) verbunden ist und das Bordnetz (10) einen Energiespeicher (11) zum Liefern elektrischer Energie mit einer Nennspannung umfasst und wobei der Starter eine Startenergie zum Starten des Verbrennungsmotors (3) verbraucht, die von einer Temperatur des Verbrennungsmotors (3) abhängig ist, mittels mindestens eines Temperatursensors (23) die Temperatur des Verbrennungsmotors (3) gemessen wird und die Startenergie basierend auf der Temperatur des Verbrennungsmotors (3) ermittelt wird,
**dadurch gekennzeichnet dass**
der Kondensatorspeicher (13) mit Hilfe einer als weiterer Energiespeicher dienenden Batterie (16) über einen weiteren DC/DC-Wandler (17), der parallel zu einem Schalter (18) die Batterie (16) parallel mit dem Kondensatorspeicher (13) verbindet, zumindest auf eine Soll-Spannung aufgeladen wird, und die Soll-Spannung mittels einer Steuereinrichtung (28) so festgelegt wird, dass die in dem auf die Soll-Spannung aufgeladenen Kondensatorspeicher (13) gespeicherte elektrische Energie größer als die anhand der gemessenen Temperatur ermittelte Startenergie ist.

2. Verfahren nach Anspruch 1, **dadurch gekennzeichnet, dass** mittels mindestens eines Ereignissensors mindestens ein Ereignis, insbesondere ein Entriegeln einer Zentralverriegelung, ein Einlegen eines Zündschlüssels in ein Zündschloss, ein Belasten eines Fahrersitzes, ein Einschalten einer Sitzheizung, registriert wird und ein Zustand der Batterie (16) und des Kondensatorspeichers (13) ermittelt wird und das Aufladen des Kondensatorspeichers (13) zeitlich eine Zeitspanne nach dem Registrieren des mindestens einen Ereignisses bewirkt wird, wobei die Zeitspanne von dem Zustand der Batterie (16) und dem Zustand des Kondensatorspeichers (13) abhängig bestimmt wird.

3. Verfahren nach Anspruch 1, **dadurch gekennzeichnet, dass** die Spannung des Kondensatorspeichers (13) mittels eines Spannungssensors (26) ermittelt wird und das Aufladen des Kondensatorspeichers (13) auf eine maximale Hysterese-Spannung bewirkt wird, die um ein frei applizierbares Delta größer als die Soll-Spannung ist, sobald die Spannung des Kondensatorspeichers (13) eine minimale Hysterese-Spannung unterschreitet, die um ein frei applizierbares weiteres Delta kleiner als die Soll-Spannung ist.

4. Verfahren nach einem der vorangehenden Ansprüche, **dadurch gekennzeichnet, dass** die Soll-Spannung so festgelegt wird, dass die in dem auf die Soll-Spannung aufgeladenen Kondenstorspeicher (13) gespeicherte elektrische Energie ausreicht, um eine vorgegebene Anzahl von Startvorgängen, des Verbrennungsmotors (3) bei der gemessenen Temperatur durchführen zu können, und die Spannung an dem Kondensatorspeicher (13) nach dem Durchführen der vorgegebenen Anzahl von Startvorgängen größer als eine Batteriespannung der Batterie (16) ist.

5. Verfahren nach einem der vorangehenden Ansprüche, **dadurch gekennzeichnet, dass** der Zustand der Batterie (16) einen Ladungszustand umfasst und die vorgegebene Anzahl von Startvorgängen auf mindestens zwei erhöht wird, wenn der Ladungszustand der Batterie (16) einen Mindestladungszustand unterschreitet.

6. Verfahren nach einem der vorangehenden Ansprüche, **dadurch gekennzeichnet, dass** ein Ladungszustand des Energiespeichers des Bordnetzes (10) ermittelt wird und bei einem Unterschreiten eines Mindestlandungszustandsschwellenwerts die Soll-Spannung so festgelegt wird, dass der Kondensatorspeicher (13) während der vorgegebenen Anzahl der Startvorgänge zusätzlich Energie über den DC/DC-Wandler (9) in das Bordnetz (10) liefern kann, wobei der Mindestladungszustandsschwellenwert von einem Alterungszustand des Energiespeichers abhängig ist.

7. Verfahren nach einem der vorangegangenen Ansprüche, **dadurch gekennzeichnet, dass** das Aufladen des Kondensatorspeichers (13) zumindest teilweise über den DC/DC-Wandler (9) aus dem Energiespeicher des Bordnetzes (10) bewirkt wird, wenn der Ladungszustand der Batterie (16) und/oder der Alterungszustand der Batterie (16) einen entsprechenden Ladungs- und/oder Alterungszustandsschwellenwert unterschritten haben.

8. Verfahren nach einem der vorangehenden Ansprüche, **dadurch gekennzeichnet, dass** die zum Starten benötigt tatsächliche Energie gemessen und gespeichert wird und nachfolgend beim Festlegen der Soll-Spannung berücksichtigt wird.

9. Verfahren nach einem der vorangehenden Ansprüche, **dadurch gekennzeichnet, dass** eine Batterienennspannung der Batterie (16) größer als die Nennspannung des Energiespeichers des Bordnetzes (10) ist und der Kondensatorspeicher (13) maximal bis auf eine Spannung von etwa 60 V aufgeladen wird.

10. Verfahren nach einem der vorangehenden Ansprüche, **dadurch gekennzeichnet, dass** der Kondensatorspeicher (13) als Ultracap ausgebildet ist.

11. Vorrichtung zum optimierten Starten eines Verbrennungsmotors (3) mittels eines Starters, der mit einem Kondensatorspeicher (13) verbunden ist, wobei der Kondensatorspeicher (13) über einen DC/DC-Wandler (9) mit einem Bordnetz (10) eines Fahrzeugs (1) verbunden ist und das Bordnetz (10) einen Energiespeicher (11) zum Liefern elektrischer Energie mit einer Nennspannung umfasst und wobei der Starter eine Startenergie zum Starten des Verbrennungsmotors (3) verbraucht, die von einer Temperatur des Verbrennungsmotors (3) abhängig ist, mittels mindestens eines Temperatursensors (23) die Temperatur des Verbrennungsmotors (3) messbar ist und die Startenergie basierend auf der Temperatur des Verbrennungsmotors (3) ermittelbar ist,
**dadurch gekennzeichnet, dass**
der Kondensatorspeicher (13) mit Hilfe einer als weiterer Energiespeicher dienenden Batterie (16) über einen weiteren DC/DC-Wandler (17), der parallel zu einem Schalter (18) die Batterie (16) parallel mit dem Kondensatorspeicher (13) verbindet, zumindest auf eine Soll-Spannung aufladbar ist, und die Soll-Spannung mittels einer Steuereinrichtung (28) so festlegbar ist, dass die in dem auf die Soll-Spannung aufgeladenen Kondensatorspeicher (13) gespeicherte elektrische Energie größer als die anhand der gemessenen Temperatur ermittelte Startenergie ist.

12. Vorrichtung nach Anspruch 11, **gekennzeichnet durch** mindestens einen Ereignissensor zum Registrieren mindestens eines Ereignisses, insbesondere eines Entriegelns einer Zentralverriegelung, eines Einlegens eines Zündschlüssels in ein Zündschloss, eines Belastens eines Fahrersitzes, eines Einschaltens einer Sitzheizung, und Zustandssensoren zum Bestimmen eines Zustands der Batterie (16) und eines Zustands des Kondensatorspeichers (13), wobei das Aufladen des Kondensatorspeichers (13) zeitlich eine Zeitspanne nach dem Registrieren des mindestens einen Ereignisses bewirkbar ist, wobei die Zeitspanne von dem Zustand der Batterie (16) und dem Zustand des Kondensatorspeichers (13) abhängig bestimmbar ist.

13. Vorrichtung nach Anspruch 11, **dadurch gekennzeichnet, dass** die Spannung des Kondensatorspeichers (13) mittels eines Spannungssensors (26) ermittelbar ist und das Aufladen des Kondensatorspeichers (13) auf eine maximale Hysterese-Spannung bewirkbar ist, die um ein frei applizierbares Delta größer als die Soll-Spannung ist, sobald die Spannung des Kondensatorspeichers (13) eine minimale Hysterese-Spannung unterschreitet, die um ein frei applizierbares weiteres Delta kleiner als die Soll-Spannung ist.

14. Vorrichtung nach einem der Ansprüche 11 bis 13, **dadurch gekennzeichnet, dass** die Soll-Spannung so festlegbar ist, dass die in dem auf die Soll-Spannung aufgeladenen Kondenstorspeicher gespeicherte elektrische Energie ausreicht, um eine vorgegebene Anzahl von Startvorgängen des Verbrennungsmotors (3) bei der gemessenen Temperatur durchführen zu können, und die Spannung an dem Kondensatorspeicher (13) nach dem Durchführen der vorgegebenen Anzahl von Startvorgängen größer als eine Batteriespannung der Batterie (16) ist.

15. Vorrichtung nach einem der Ansprüche 11 bis 14, **gekennzeichnet durch** Mittel zum Ermitteln eines Ladungszustands des Energiespeichers des Bordnetzes (10) und Mitteln zum Feststellen eines Unterschreitens eines Mindestladungszustandsschwellenwerts, wobei die Soll-Spannung mittels der Steuereinrichtung (28) als Folge des Unterschreitens des Mindestladungszustandsschwellenwerts so festlegbar ist, dass der Kondensatorspeicher (13) während der vorgegebenen Anzahl der Startvorgänge zusätzlich Energie über den DC/DC-Wandler (9) in das Bordnetz (10) liefern kann, wobei der Mindestladungszustandsschwellenwert von einem Alterungszustand des Energiespeichers abhängig ist.

16. Vorrichtung nach einem der Ansprüche 11 bis 15, **gekennzeichnet durch** Mittel zum Erfassen eines Landungszustands der Batterie (16) und/oder einer Batterietemperatur und/oder eines Alterungszustands der Batterie (16) und/oder einer Fahrzeugaußentemperatur, die beim Festlegen der Soll-Spannung berücksichtigbar sind.

17. Vorrichtung nach einem der Ansprüche 11 bis 16, **dadurch gekennzeichnet, dass** die vorgegebene Anzahl von Startvorgängen auf mindestens zwei erhöht wird, wenn der Ladungszustand der Batterie (16) einen Mindestladungszustand unterschreitet.

18. Vorrichtung nach einem der Ansprüche 11 bis 17, **dadurch gekennzeichnet, dass** das Aufladen des Kondensatorspeichers (13) zumindest teilweise über den DC/DC-Wandler (9) aus dem Energiespeicher des Bordnetzes (10) bewirkbar ist, wenn der Ladungszustand der Batterie (16) und /oder der Alterungszustand der Batterie (16) entsprechend einen Ladungszustandsschwellenwert und/oder einen Alterungszustandsschwellenwert unterschritten haben.

19. Vorrichtung nach einem der Ansprüche 11 bis 18, **gekennzeichnet durch** Mittel zum Messen einer zum Starten tatsächlich benötigten Energie und einen Speicher zum Abspeichern der tatsächlich benötigten Energie, wobei die tatsächlich benötigte Energie nachfolgend beim Festlegen der Soll-Spannung berücksichtigt werden kann.

20. Vorrichtung nach einem der Ansprüche 11 bis 19, **dadurch gekennzeichnet, dass** eine Batterienennspannung der Batterie (16) größer als die Nennspannung des Energiespeichers des Bordnetzes (10) ist und der Kondensatorspeicher (13) für eine maximale Spannung von etwa 60 V ausgelegt ist.

21. Vorrichtung nach einem der Ansprüche 11 bis 20, **dadurch gekennzeichnet, dass** der Kondensatorspeicher (13) als Ultracap ausgebildet ist.

## Claims

1. A method for starting an internal combustion engine (3) in an optimised manner by means of a starter that is connected to a capacitor storage (13), wherein the capacitor storage (13) is connected via a DC/DC converter (9) with an on-board electrical system (10) of a vehicle (1) and the on-board electrical system (10) comprises an energy storage (11) for delivering electrical energy with a nominal voltage, and wherein the starter consumes a starting power for starting the internal combustion engine (3) that is dependent on a temperature of the internal combustion engine (3), the temperature of the internal combustion engine (3) is measured by means of at least one temperature sensor (23) and the starting power is determined based on the temperature of the internal combustion engine (3),
**characterised in that**
the capacitor storage (13) is charged at least to a nominal voltage by means of a battery (16) acting as further energy storage via a further DC/DC converter (17), which connects parallel to a switch (18) the battery (16) with the capacitor storage (13) in a parallel manner, and the nominal voltage is determined by means of a control device (28) as such that the electrical energy stored in the capacitor storage (13) charged to the nominal voltage is greater than the starting power determined by means of the measured temperature.

2. The method according to claim 1, **characterised in that** at least one event, particularly unlocking a central locking system, inserting an ignition key into an ignition lock, putting weight on a driver's seat, activating a seat heater, is registered by means of at least one event sensor and a state of the battery (16) and the capacitor storage (13) is determined, and the charging of the capacitor storage (13) is effected in time at a time interval after registering the at least one event, wherein the time interval is determined dependent on the state of the battery (16) and the state of the capacitor storage (13).

3. The method according to claim 1, **characterised in that** the voltage of the capacitor storage (13) is determined by means of a voltage sensor (26) and the charging of the capacitor storage (13) is effected to a maximum hysteresis voltage that is greater by a freely applicable delta than the nominal voltage as soon as the voltage of the capacitor storage (13) falls below a minimum hysteresis voltage less by a freely applicable delta than the nominal voltage.

4. The method according to one of the preceding claims, **characterised in that** the nominal voltage is determined as such that the electrical energy stored in the capacitor storage (13) charged to the nominal voltage is sufficient to carry out a pre-set number of starting processes of the internal combustion engine (3) at the measured temperature, and the voltage on the capacitor storage (13) after carrying out the pre-set number of starting processes is greater than a battery voltage of the battery (16).

5. The method according to one of the preceding claims, **characterised in that** the state of the battery (16) comprises a charge state and the pre-set number of starting processes is increased to at least two when the charge state of the battery (16) falls below a minimum charge state.

6. The method according to one of the preceding claims, **characterised in that** a charge state of the energy storage of the on-board electrical system (10) is determined and in the case of falling below a minimum charge state threshold value the nominal voltage is determined as such that the capacitor storage (13) can supply during the pre-set number of starting processes additional energy via the DC/DC converter (9) to the on-board electrical system (10), wherein the minimum charge state threshold value is dependent on an age state of the energy storage.

7. The method according to one of the preceding claims, **characterised in that** the charging of the capacitor storage (13) is effected at least partially via the DC/DC converter (9) from the energy storage of the on-board electrical system (10) when the charge state of the battery (16) and/or the age state of the battery (16) have fallen below a corresponding charge and/or age state threshold value.

8. The method according to one of the preceding claims, **characterised in that** the actual energy needed for starting is measured and stored and subsequently taken into consideration when determining the nominal voltage.

9. The method according to one of the preceding claims, **characterised in that** a battery nominal voltage of the battery (16) is greater than the nominal voltage of the energy storage of the on-board electrical system (10) and the capacitor storage (13) is charged at maximum to a voltage of approx. 60 V.

10. The method according to one of the preceding claims, **characterised in that** the capacitor storage (13) is configured as ultracap.

11. An apparatus for starting an internal combustion engine (3) in an optimised manner by means of a starter that is connected to a capacitor storage (13), wherein the capacitor storage (13) is connected via a DC/DC converter (9) with an on-board electrical system (10) of a vehicle (1) and the on-board electrical system (10) comprises an energy storage (11) for delivering electrical energy with a nominal voltage, and wherein the starter spends a starting power for starting the internal combustion engine (3) that is dependent on a temperature of the internal combustion engine (3), the temperature of the internal combustion engine (3) can be measured by means of at least one temperature sensor (23) and the starting power can be determined based on the temperature of the internal combustion engine (3),
**characterised in that**
the capacitor storage (13) is charged at least to a nominal voltage by means of a battery (16) acting as further energy storage via a further DC/DC converter (17), which connects parallel to a switch (18) the battery (16) with the capacitor storage (13) in a parallel manner, and the nominal voltage can be determined by means of a control device (28) as such that the electrical energy stored in the capacitor storage (13) charged to the nominal voltage is greater than the starting power determined by means of the measured temperature.

12. The apparatus according to claim 11, **characterised by** at least one event sensor for registering at least one event, particularly an unlocking of a central locking system, inserting an ignition key into an ignition lock, putting weight on a driver's seat, activating a seat heater, and state sensors for determining a state of the battery (16) and a state of the capacitor storage (13),wherein the charging of the capacitor storage (13) can be effected in time at a time interval after registering the at least one event, wherein the time interval can be determined dependent on the state of the battery (16) and the state of the capacitor storage (13).

13. The apparatus according to claim 11, **characterised in that** the voltage of the capacitor storage (13) can be determined by means of a voltage sensor (26) and the charging of the capacitor storage (13) can be effected to a maximum hysteresis voltage that is greater by a freely applicable delta than the nominal voltage as soon as the voltage of the capacitor storage (13) falls below a minimum hysteresis voltage less by a freely applicable delta than the nominal voltage.

14. The apparatus according to one of the claims 11 to 13, **characterised in that** that the nominal voltage can be determined as such that the electrical energy stored in the capacitor storage (13) charged to the nominal voltage is sufficient to carry out a pre-set number of starting processes of the internal combustion engine (3) at the measured temperature, and the voltage on the capacitor storage (13) after carrying out the pre-set number of starting processes is greater than a battery voltage of the battery (16).

15. The apparatus according to one of the claims 11 to 14, **characterised by** means for determining a charge state of the energy storage of the on-board electrical system (10) and means for detecting when falling below a minimum charge state threshold value, wherein the nominal voltage can be determined by means of the control device (28) as a result of falling below the minimum charge state threshold value as such that the capacitor storage (13) can supply during the pre-set number of starting processes additional energy via the DC/DC converter (9) to the on-board electrical system (10), wherein the minimum charge state threshold value is dependent on an age state of the energy storage.

16. The apparatus according to one of the claims 11 to 15, **characterised by** means for capturing a charge state of the battery (16) and/or a battery temperature and/or an age state of the battery (16) and/or a vehicle external temperature that can be taken into consideration when determining the nominal value.

17. The apparatus according to one of the claims 11 to 16, **characterised in that** the pre-set number of starting processes is increased to at least two when the charge state of the battery (16) falls below a minimum charge state.

18. The apparatus according to one of the claims 11 to 17, **characterised in that** the charging of the capacitor storage (13) can be effected at least partially via the DC/DC converter (9) from the energy storage of the on-board electrical system (10) when the charge state of the battery (16) and/or the age state of the battery (16) have fallen correspondingly a charge state threshold value and/or an age state threshold value.

19. The apparatus according to one of the claims 11 to 18, **characterised by** means for measuring an energy actually needed for starting and a storage for storing the actually needed energy, wherein the actually needed energy can subsequently be taken into consideration when determining the nominal value.

20. The apparatus according to one of the claims 11 to 19, **characterised in that** a battery nominal value of the battery (16) is greater than the nominal value of the energy storage of the on-board electrical system (10) and the capacitor storage (13) is designed for a maximum voltage of approx. 60 V.

21. The apparatus according to one of the claims 11 to 20, **characterised in that** the capacitor storage (13) is configured as ultracap.

## Revendications

1. Procédé permettant un démarrage optimisé d'un moteur à combustion interne (3) au moyen d'un démarreur, qui est connecté à un accumulateur à condensateur (13), dans lequel l'accumulateur à condensateur (13) est relié via un convertisseur DC/DC (9) avec un réseau de bord (10) d'un véhicule (1) et le réseau de bord (10) comprend un accumulateur d'énergie (11) pour fournir de l'énergie électrique ayant une tension nominale et dans lequel le démarreur consomme une énergie de démarrage, qui dépend d'une température du moteur à combustion interne (3), pour démarrer le moteur à combustion interne (3), la température du moteur à combustion interne (3) étant mesurée au moyen d'au moins un capteur de température (23) et l'énergie de démarrage étant déterminée sur la base de la température du moteur à combustion interne (3),
**caractérisé en ce que**
l'accumulateur à condensateur (13) est chargé au moins à une tension de consigne à l'aide d'une batterie servant d'accumulateur d'énergie supplémentaire (16) via un autre convertisseur DC/DC (17), qui relie, parallèlement à un commutateur (18), la batterie (16) en parallèle avec l'accumulateur à condensateur (13), et la tension de consigne est établie au moyen d'un dispositif de commande (28), de sorte que l'énergie électrique accumulée dans l'accumulateur à condensateur chargé à la tension de consigne (13) soit supérieure à l'énergie de démarrage déterminée au moyen de la température mesurée.

2. Procédé selon la revendication 1, **caractérisé en ce qu'**au moyen d'au moins un capteur d'événement au moins un événement, en particulier un déverrouillage d'une serrure centrale, une insertion d'une clé de contact dans une serrure de contact, un alourdissement d'un siège conducteur, un allumage du chauffage du siège, est enregistré et un état de la batterie (16) et de l'accumulateur à condensateur (13) est déterminé et la recharge de l'accumulateur à condensateur (13) est déclenchée dans le temps à une période après l'enregistrement du au moins un événement, la période étant déterminée en fonction de l'état de la batterie (16) et de l'état de l'accumulateur à condensateur (13) .

3. Procédé selon la revendication 1, **caractérisé en ce que** la tension de l'accumulateur à condensateur (13) est déterminée au moyen d'un capteur de tension (26) et la recharge de l'accumulateur à condensateur (13) est déclenchée à une tension d'hystérésis maximale, qui est supérieure à la tension de consigne d'un delta qui peut être appliqué librement, dès que la tension de l'accumulateur à condensateur (13) devient inférieure à une tension d'hystérésis minimale, qui est inférieure à la tension de consigne d'un delta qui peut être appliqué librement.

4. Procédé selon l'une des revendications précédentes, **caractérisé en ce que** la tension de consigne est établie, de sorte que l'énergie électrique accumulée dans l'accumulateur à condensateur chargé à la tension de consigne (13) est suffisante pour pouvoir effectuer un nombre donné de procédures de démarrage du moteur à combustion interne (3) à la température mesurée et la tension de l'accumulateur à condensateur (13), après que le nombre donné de procédures de démarrage a été effectué, est supérieure à une tension de batterie de la batterie (16).

5. Procédé selon l'une des revendications précédentes, **caractérisé en ce que** l'état de la batterie (16) comprend un état de charge et le nombre donné de procédures de démarrage est porté à au moins deux, quand l'état de charge de la batterie (16) devient inférieur à un état de charge minimal.

6. Procédé selon l'une des revendications précédentes, **caractérisé en ce qu'**un état de charge de l'accumulateur d'énergie du réseau de bord (10) est déterminé et lors du franchissement vers le bas d'une valeur seuil de l'état de charge minimal la tension de consigne est établie, de sorte que, pendant l'exécution du nombre donné de procédures de démarrage, l'accumulateur à condensateur (13) puisse fournir de l'énergie supplémentaire via le convertisseur DC/DC (9) au réseau de bord (10), la valeur seuil de l'état de charge minimal dépendant d'un état de vieillissement de l'accumulateur d'énergie.

7. Procédé selon l'une des revendications précédentes, **caractérisé en ce que** la recharge de l'accumulateur à condensateur (13) est déclenchée au moins partiellement via le convertisseur DC/DC (9), en provenance de l'accumulateur d'énergie du réseau de bord (10), quand l'état de charge de la batterie (16) et/ou l'état de vieillissement de la batterie (16) ont franchi vers le bas une valeur seuil d'état de charge et/ou d'état de vieillissement correspondante.

8. Procédé selon l'une des revendications précédentes, **caractérisé en ce que** l'énergie effectivement requise pour le démarrage est mesurée et accumulée et elle est prise en compte ultérieurement lors de la détermination de la tension de consigne.

9. Procédé selon l'une des revendications précédentes, **caractérisé en ce qu'**une tension nominale de batterie de la batterie (16) est supérieure à la tension nominale de l'accumulateur d'énergie du réseau de bord (10) et l'accumulateur à condensateur (13) est rechargé au maximum jusqu'à une tension d'environ 60 V.

10. Procédé selon l'une des revendications précédentes, **caractérisé en ce que** l'accumulateur à condensateur (13) est réalisé sous la forme d'un ultracap.

11. Dispositif permettant un démarrage optimisé d'un moteur à combustion interne (3) au moyen d'un démarreur, qui est connecté à un accumulateur à condensateur (13), dans lequel l'accumulateur à condensateur (13) est relié via un convertisseur DC/DC (9) avec un réseau de bord (10) d'un véhicule (1) et le réseau de bord (10) comprend un accumulateur d'énergie (11) pour fournir de l'énergie électrique ayant une tension nominale et dans lequel le démarreur consomme une énergie de démarrage, qui dépend d'une température du moteur à combustion interne (3), pour démarrer le moteur à combustion interne (3), la température du moteur à combustion interne (3) pouvant être mesurée au moyen d'au moins un capteur de température (23) et l'énergie de démarrage pouvant être déterminée sur la base de la température du moteur à combustion interne(3),
**caractérisé en ce que**
l'accumulateur à condensateur (13) peut être chargé au moins à une tension de consigne à l'aide d'une batterie servant d'accumulateur d'énergie supplémentaire (16) via un autre convertisseur DC/DC (17), qui relie, parallèlement à un commutateur (18), la batterie (16) en parallèle avec l'accumulateur à condensateur (13), et la tension de consigne peut être établie au moyen d'un dispositif de commande (28), de sorte que l'énergie électrique accumulée dans l'accumulateur à condensateur chargé à la tension de consigne (13) soit supérieure à l'énergie de démarrage déterminée au moyen de la température mesurée.

12. Dispositif selon la revendication 11, **caractérisé par** au moins un capteur d'événement pour enregistrer au moins un événement, en particulier un déverrouillage d'une serrure centrale, une insertion d'une clé de contact dans une serrure de contact, un alourdissement d'un siège conducteur, un allumage du chauffage du siège, et par des capteurs d'état pour la détermination d'un état de la batterie (16) et d'un état de l'accumulateur à condensateur (13), dans lequel la recharge de l'accumulateur à condensateur (13) peut être déclenchée dans le temps à une période après l'enregistrement du au moins un événement, la période pouvant être déterminée en fonction de l'état de la batterie (16) et de l'état de l'accumulateur à condensateur (13).

13. Dispositif selon la revendication 11, **caractérisé en ce que** la tension de l'accumulateur à condensateur (13) peut être déterminée au moyen d'un capteur de tension (26) et la recharge de l'accumulateur à condensateur (13) peut être déclenchée à une tension d'hystérésis maximale, qui est supérieure à la tension de consigne d'un delta qui peut être appliqué librement, dès que la tension de l'accumulateur à condensateur (13) devient inférieure à une tension d'hystérésis minimale, qui est inférieure à la tension de consigne d'un delta qui peut être appliqué librement.

14. Dispositif selon l'une des revendications 11 à 13, **caractérisé en ce que** la tension de consigne peut être établie, de sorte que l'énergie électrique accumulée dans l'accumulateur à condensateur chargé à la tension de consigne (13) est suffisante pour pouvoir effectuer un nombre donné de procédures de démarrage du moteur à combustion interne (3) à la température mesurée et la tension de l'accumulateur à condensateur (13), après que le nombre donné de procédures de démarrage a été effectué, est supérieure à une tension de batterie de la batterie (16).

15. Dispositif selon l'une des revendications 11 à 14, **caractérisé par** des moyens pour déterminer un état de charge de l'accumulateur d'énergie du réseau de bord (10) et par des moyens pour détecter un franchissement vers le bas d'une valeur seuil d'état de charge minimal, dans lequel la tension de consigne peut être établie au moyen d'un dispositif de commande (28) à la suite du franchissement vers le bas de la valeur seuil d'état de charge minimal, de sorte que, pendant le nombre donné de procédures de démarrage, l'accumulateur à condensateur (13) puisse fournir de l'énergie supplémentaire via le convertisseur DC/DC (9) au réseau de bord (10), la valeur seuil de l'état de charge minimal dépendant d'un état de vieillissement de l'accumulateur d'énergie.

16. Dispositif selon l'une des revendications 11 à 15, **caractérisé par** des moyens pour détecter un état de charge de la batterie (16) et/ou d'une température de batterie et/ou d'un état de vieillissement de la batterie (16) et/ou d'une température extérieure du véhicule, qui peuvent être pris en compte lors de la détermination de la tension de consigne.

17. Dispositif selon l'une des revendications 11 à 16, **caractérisé en ce que** le nombre donné de procédures de démarrage est augmenté à au moins deux, quand l'état de charge de la batterie (16) devient inférieur à un état de charge minimal.

18. Dispositif selon l'une des revendications 11 à 17, **caractérisé en ce que** la recharge de l'accumulateur à condensateur (13) peut être déclenchée au moins partiellement via le convertisseur DC/DC (9), en provenance de l'accumulateur d'énergie du réseau de bord (10), quand l'état de charge de la batterie (16) et/ou l'état de vieillissement de la batterie (16) ont franchi vers le bas respectivement une valeur seuil d'état de charge et/ou une valeur seuil d'état de vieillissement.

19. Dispositif selon l'une des revendications 11 à 18, **caractérisé par** des moyens pour mesurer une énergie effectivement requise pour le démarrage et un accumulateur pour stocker l'énergie effectivement requise, dans lequel l'énergie effectivement requise peut être prise en compte ultérieurement lors de la détermination de la tension de consigne.

20. Dispositif selon l'une des revendications 11 à 19, **caractérisé en ce qu'**une tension nominale de batterie de la batterie (16) est supérieure à la tension nominale de l'accumulateur d'énergie du réseau de bord (10) et l'accumulateur à condensateur (13) est conçu pour une tension maximale d'environ 60 V.

21. Dispositif selon l'une des revendications 11 à 20, **caractérisé en ce que** l'accumulateur à condensateur (13) est conçu sous la forme d'un ultracap.
